# EUROPEAN PATENT APPLICATION

(11) **EP 0 987 484 A2**
(43) Date of publication of application: **22.03.2000**
(21) Application number: 99306374.2
(22) Date of filing: 12.08.1999
(51) Int. Cl.: F16L 37/252, F16L 37/24

(54) **Pipe coupler**

(30) Priority: 14.08.1998 KR 9833031
(71) Applicant: Lee, Do Yean, Seoul (KR)
(72) Inventor: Lee, Do Yean, Seoul (KR)
(74) Representative: Hammler, Martin Franz

(57) **Abstract**

A pipe coupler for connecting pipes together is disclosed. The pipe coupler includes a cylindrical socket (9, 9a). A pocket (11, fig. 2a) is formed inside the socket (9, 9a). A packing (12) is inserted into the pocket to seal against end portions (1, 1a) of two pipes. A plurality of withdrawing paths (14) is formed inside the socket (9, 9a), and a binding groove (13) communicates with the withdrawing paths (14). A plurality of protuberances (2, 2a) is formed on the pipe end (1, 1a) correspondingly to the plurality of the withdrawing paths (14), for being inserted into the plurality of the withdrawing paths (14). The pipe end (1, 1a) is slightly rotated after entering into the socket (9, 9a) so as to make the protuberances disposed within the binding grooves (13) and between the withdrawing paths (14). A hole (15; 17, 18, fig.3) is formed in the socket (9, 9a), for receiving bolts or similar fasteners to fix the socket (9, 9a) to the pipe end (1, 1a), whereby a pipe connection is securely maintained.

## Description

### BACKGROUND OF THE INVENTION

### 1. Field of the invention

The present invention relates to a pipe coupler for connecting pipes together. More specifically, the present invention relates to a pipe coupler in which a socket shaped coupler for receiving pipe ends provided with protuberances is used, thereby making the connection of pipes more convenient.

### 2. Description of the prior art

In conventional pipe connections, two semicircular type upper and lower couplers are sometimes used, and they are fastened with bolts and nuts. Therefore, when the connection of pipes is carried out, the horizontal straightness cannot be easily attained. As a result, the connection of pipes was difficult, and the connecting time was extended.

### SUMMARY OF THE INVENTION

The present invention is intended to overcome the above described disadvantages of the conventional technique.

In achieving the above object, the pipe coupler according to the present invention comprises: a generally cylindrical socket for accommodating a pipe end; a withdrawing path formed inside the socket; a binding groove communicating with the withdrawing path; a protuberance formed on the pipe end for insertion into the withdrawing path; the pipe end being rotated after entering into the socket so as to move the protuberance from the insertion path into the binding groove, whereby the binding groove acts to prevent axial withdrawal of the pipe end, and a hole formed in the socket, for receiving a fastener to fix the socket to the pipe end, whereby a pipe connection is securely maintained.

Preferably the pipe coupler comprises at least a pair of said sockets for receiving a corresponding number of said pipe ends. The or each socket may include a pocket in which a seal or packing is received for effecting a fluid seal between the pipe end and socket.

### BRIEF DESCRIPTION OF THE DRAWINGS

Further preferred features and advantages of the present invention are in the dependent claims or are described below with reference to illustrative embodiments shown in the drawings, in which:
FIG. 1 is an exploded perspective view of a pipe coupler forming a first embodiment of the present invention;

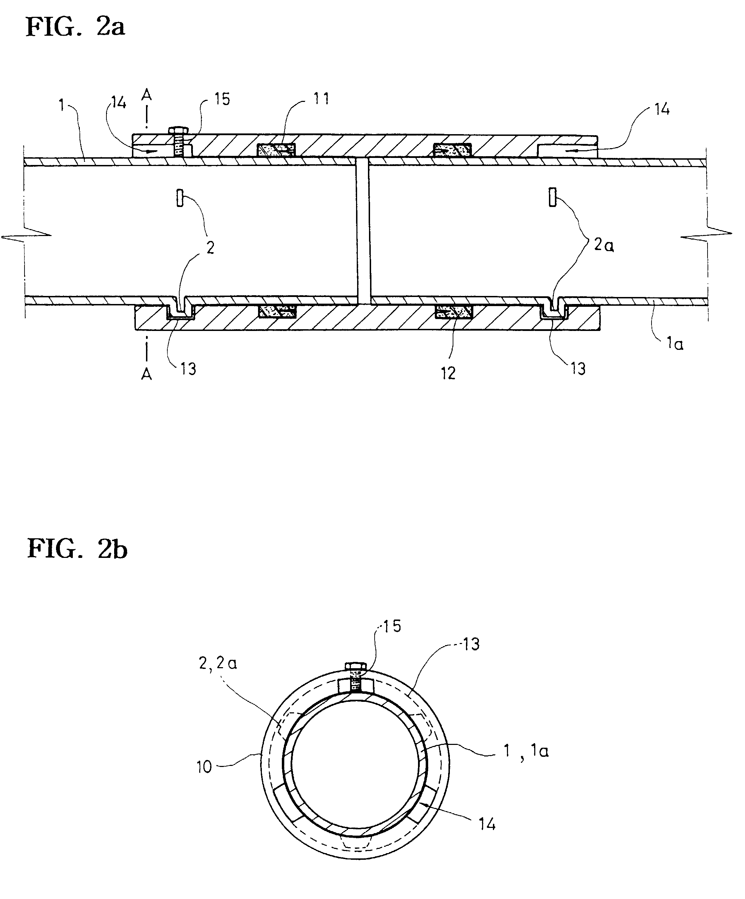

FIG. 2a is a longitudinal sectional view of the coupler of FIG. 1, showing the assembled state of two pipes;
FIG. 2b is a sectional view taken along a line A-A of FIG. 2a;
FIG. 3 is an exploded perspective view of another embodiment of the pipe coupler of the present invention in which two fastening bolts are inserted from roughly opposite directions;
FIG. 4a is a longitudinal sectional view showing the assembled state of the two pipes of FIG. 3;
FIG. 4b is a sectional view taken along a line B-B of FIG. 4a; and
FIGs. 5a and 5b respectively illustrate pipe couplers embodying the invention and comprising an L shaped body and a T shaped body.

### DETAILED DESCRIPTION OF THE PREFERRED EMBODIMENTS

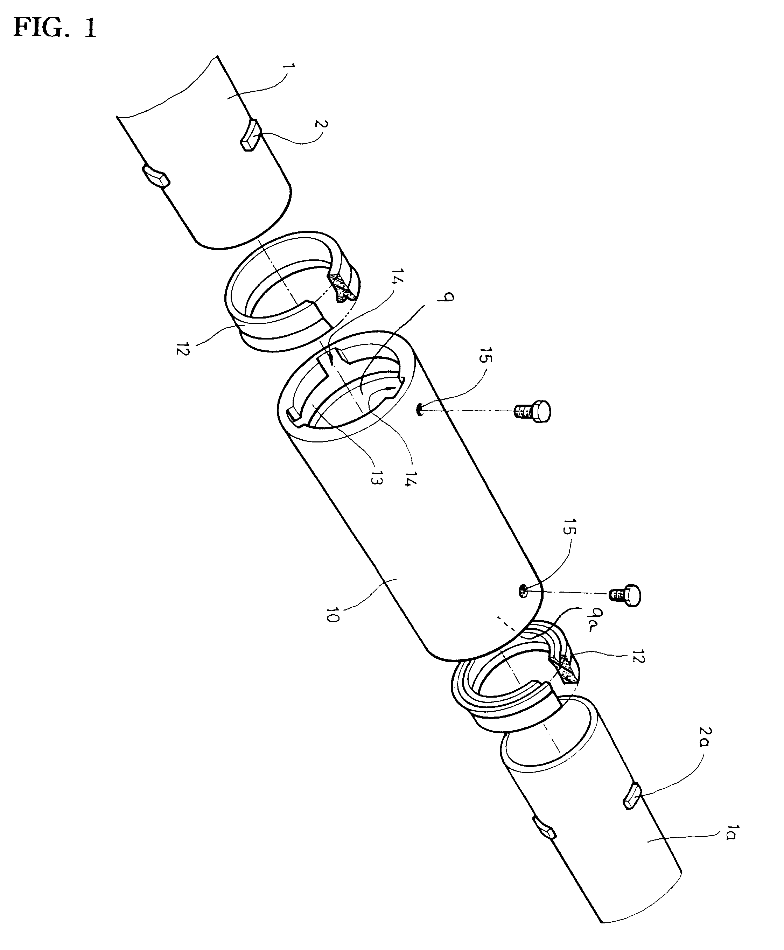

The pipe coupler shown in FIG. 1 includes: a hollow body 10 having two end portions forming a pair of cylindrical sockets 9,9a for reception of respective pipe ends 1,1a; a pair of pockets 11 formed inside the body 10; a pair of packings 12 inserted into the respective pockets 11 to seal against the respective pipe ends 1 and 1a; a plurality of withdrawing paths 14 comprising generally axially extending grooves formed in inner walls of the sockets 9,9a; respective binding grooves 13 extending circumferentially within each socket 9,9a and communicating with the pluralities of withdrawing paths 14; a plurality of protuberances 2 and 2a formed on each of the ends 1, 1a of the two pipes correspondingly to the pluralities of withdrawing paths 14, for being inserted into the pluralities of withdrawing paths 14; the ends of the two pipes 1 and la being slightly rotated after entering into the respective sockets 9,9a so as to move the protuberances 2 and 2a into the binding grooves 13 and out of alignment with the withdrawing paths 14; and a pair of threaded holes 15 formed in the body 10, for receiving bolts, grubscrews, setscrews or similar threaded fasteners (hereafter "bolts") to fix the body 10 to the ends of the two pipes 1 and 1a, whereby a pipe connection is securely maintained.

The holes 15 are positioned in the withdrawing paths 14 or in alignment with the respective binding grooves 13 at their junction with the withdrawing paths 14. The ends of the fastening bolts in use protrude into the withdrawing paths 14 or the binding grooves 13, preventing the protuberances 2, 2a from being moved back into the withdrawing paths 14.

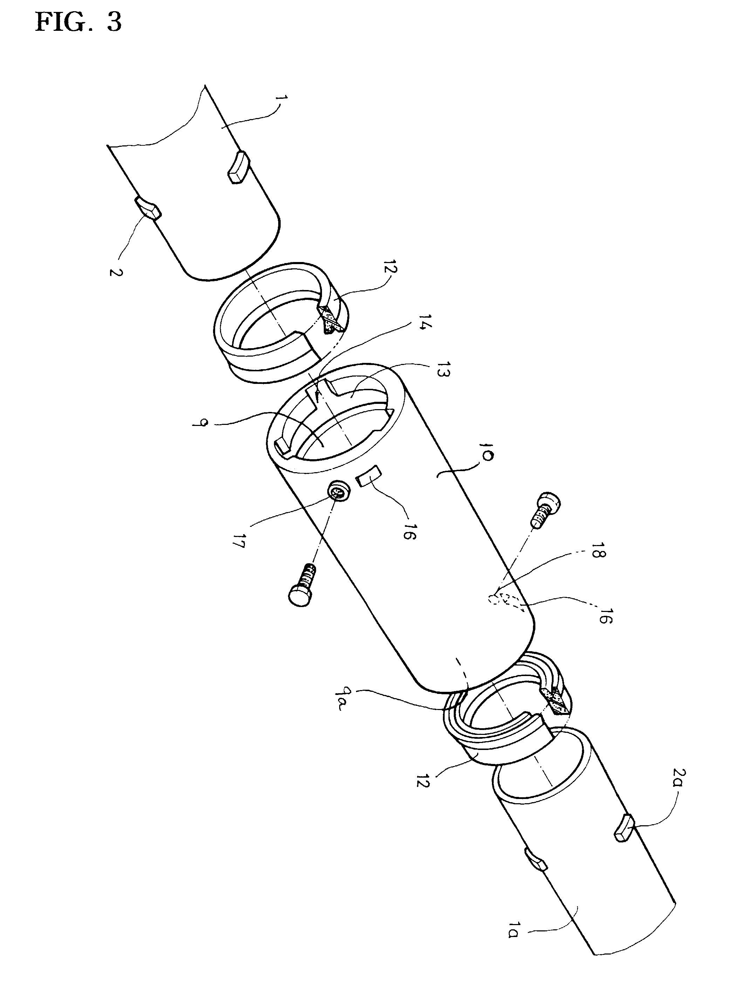

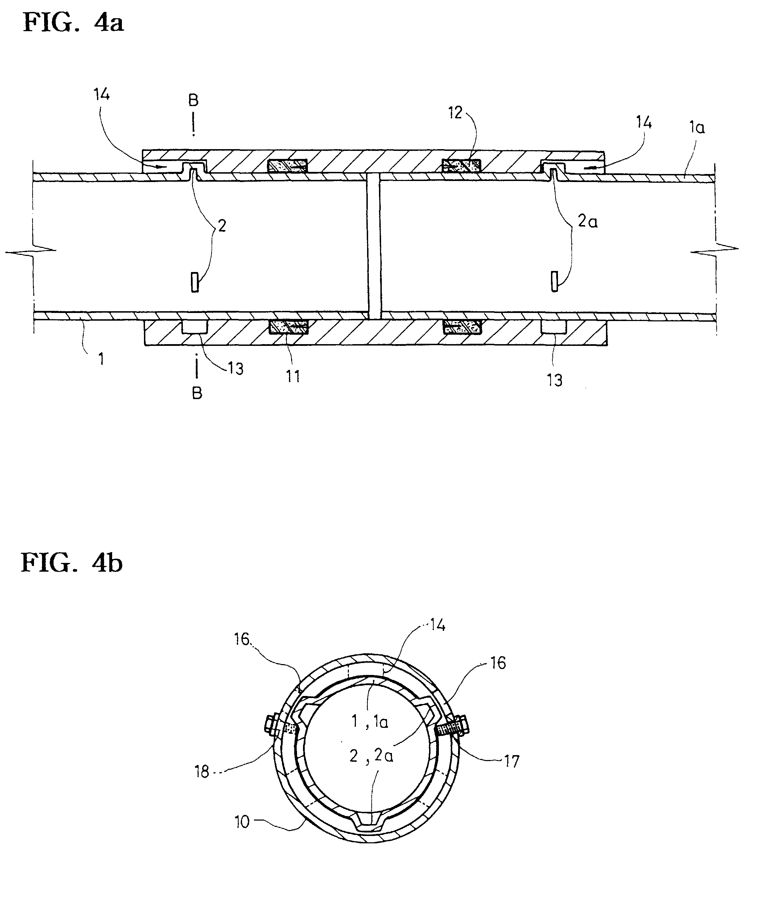

In another embodiment shown in FIGs 3, 4a and 4b, a viewing window 16 is formed in the body 10, intersecting the binding groove 13 between the withdrawing paths 14, so that the correct positioning of the protuberance 2 or 2a can be confirmed. Further, threaded holes 17 and 18 for respective fastening bolts for the sockets 9,9a are formed in generally opposed positions on either side of the longitudinal centre plane of the body 10, so that bolts can be inserted into the body 10 and secured from opposite directions.

As shown in FIG. 3, the holes 17,18 intersect the binding grooves 13 at locations remote from the withdrawal paths 14 and thus the ends of the bolts must be tightened against the pipe ends 1,1a to prevent rotation of the protuberances into alignment with the withdrawal paths 14 followed by axial withdrawal of the pipe ends 1,1a from the body 10. However, if desired, the holes may be positioned to intersect with the withdrawal paths 14, or preferably with their junctions with the binding grooves 13, to deny the protuberances access to the withdrawal paths 14 even if the bolts are not tightened against the pipe ends 1, 1a. Furthermore, the holes 17,18 may both be positioned on the same side of the body 10.

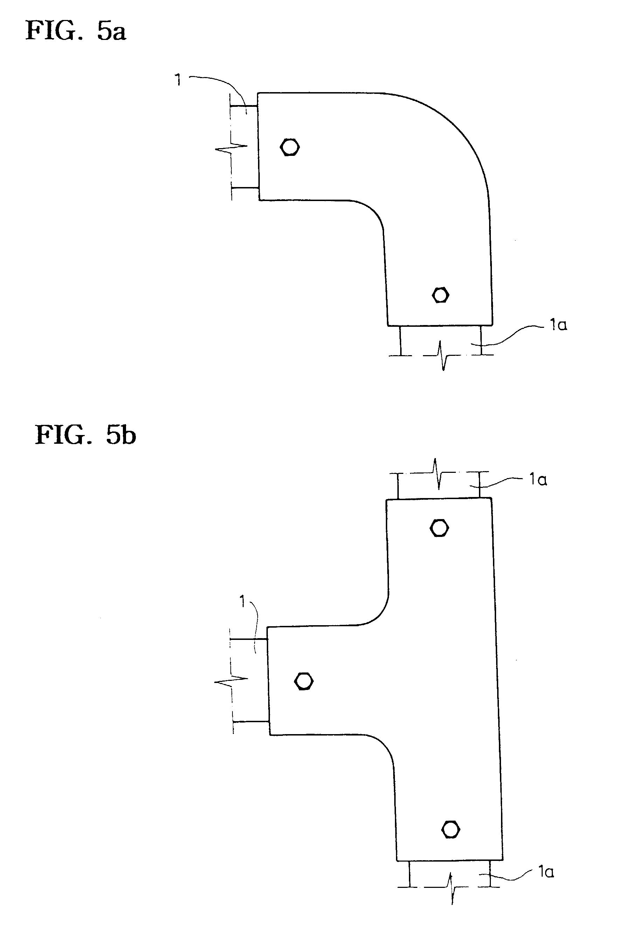

In still other embodiments, as shown for example in FIGs 5a and 5b, the socket 10 may be of an L shaped form or a T shaped form, for use in appropriate cases. Other forms of body, e.g. cruciform, or for connecting up to six orthogonal pipe ends, will be readily apparent.

Although a threaded fastener has been specifically described for insertion in the holes 15, 17, 18, other suitable fasteners such as dowels or roll pins may be used instead. Where sealing of the pipe joint is not required, a split pin or similar fastener received in opposed holes and extending across the diameter of the socket can be used.

## Claims

1. A pipe coupler comprising:
a generally cylindrical socket (9, 9a) for accommodating a pipe end (1a, 1b);
a withdrawing path (14) formed inside the socket;
a binding groove (13) communicating with the withdrawing path;
a protuberance (2, 2a) formed on the pipe end (1, 1a) for insertion into the withdrawing path (14); the pipe end (1, 1a) being rotated after entering into the socket (9, 9a) so as to move the protuberance (2, 2a) from the insertion path (14) into the binding groove (13), whereby the binding groove (13) acts to prevent axial withdrawal of the pipe end (1, 1a), and
a hole (15, 17, 18) formed in the socket (9, 9a), for receiving a fastener to fix the socket to the pipe end (1, 1a), whereby a pipe connection is securely maintained.

2. The pipe coupler as claimed in claim 1, wherein a viewing window (16) is formed in a body (10) of the coupler, intersecting the binding groove (13) between said withdrawing paths (14).

3. The pipe coupler as claimed in claim 1 or 2 comprising at least a pair of said sockets (9, 9a) for receiving a corresponding number of said pipe ends (1, 1a).

4. The pipe coupler as claimed in any preceding claim wherein the or each socket (9, 9a) includes a pocket (11) in which a seal or packing (12) is received for effecting a fluid seal between the pipe end (1, 1a) and the socket (9, 9a).

5. The pipe coupler as claimed in any preceding claim, wherein an end of the fastener intersects with the withdrawal path (14) and/or the binding groove (13) to retain the protuberances (2, 2a) in the binding groove (13).

6. The pipe coupler as claimed in any preceding claim, wherein the hole (15, 17, 18) is threaded for reception of a bolt, grubscrew, setscrew or like threaded fastener.

7. The pipe coupler as claimed in claim 6, wherein an end of the threaded fastener grips the pipe end (1, 1a).

8. The pipe coupler as claimed in any preceding claim, comprising a pair of said sockets (9, 9a) with a pair of said holes (15) disposed on the same side of a longitudinal centre plane of the coupler.

9. The pipe coupler as claimed in any of claims 1 to 7, comprising a pair of said sockets (9, 9a) with a pair of said holes (17, 18) disposed on opposite sides of a longitudinal centre plane of the coupler.

10. The pipe coupler as claimed in any preceding claim comprising an L shaped body (10).

11. The pipe coupler as claimed in any of claims 1 to 9 comprising a T shaped body (10).
